# FASCICULE DE BREVET EUROPEEN

(11) **EP 0 425 371 B1**
(45) Date de publication et mention de la délivrance du brevet: **28.09.1994**
(21) Numéro de dépôt: 90402992.3
(22) Date de dépôt: 24.10.1990
(51) Int. Cl.: G02B 6/06

(54) **Procédé de fabrication d'un module agrandisseur d'images pour panneaux lumineux à fibres optiques**
Verfahren zur Herstellung eines Optikfaser-Bildvergrösserungsmoduls für Leuchtschirme
Method of manufacture of a fibre-optic image enlargement module for display panels

(30) Priorité: 26.10.1989 FR 8914043
(43) Date de publication de la demande: 02.05.1991
(73) Titulaire: COMMISSARIAT A L'ENERGIE ATOMIQUE, 75015 Paris (FR)
(72) Inventeur: Chazalon, Michel, F-78310 Maurepas (FR); Gauthereau, Didier, F-78540 Vernouillet (FR); Micolon, Patrice, F-78220 Viroflay (FR); Palanque, Serge, F-91940 Les Ulis (FR)
(74) Mandataire: Poulin, Gérard

(56) Documents cités:
- EP-A- 0 312 267
- EP-A- 0 324 147
- EP-A- 0 330 590
- US-A- 3 909 109
- US-A- 4 208 096

## Description

L'invention concerne un procédé de fabrication d'un module agrandisseur d'images, destiné à constituer, avec d'autres de ces modules, un grand écran, tel qu'un panneau lumineux à fibres optiques et cristaux liquides.

Plusieurs types de grands écrans pour visualiser des images couleur animées sont destinés à équiper des lieux de rassemblements publics de plein-air, tels que des stades, des hippodromes, des centres commerciaux.

Un premier type de grand écran est le système de projecteurs vidéo, formant un mur d'images. Ce mur est constitué d'un empilage de nombreux moniteurs vidéo. De tels systèmes sont difficilement exploitables en plein-air, en raison de leur luminosité trop faible, l'image globale visualisée n'étant pas distinctement perçue par les spectateurs.

En ce qui concerne les panneaux constitués à partir de diodes électroluminescentes, ils ne couvrent pas l'ensemble du spectre des couleurs. En effet, il n'existe pas de diode émettant dans le bleu.

Un autre type de grand écran animé consiste à visualiser une multitude de pixels de couleurs. Ces grands écrans sont constitués soit d'une multitude de petits tubes cathodiques, soit d'une multitude de lampes à incandescence. Ce type de grand écran présente une mauvaise granularité, c'est-à-dire des pixels séparés de plusieurs centimètres. De plus, il nécessite une très forte consommation électrique, une grosse infrastructure et un coût très élevé.

Enfin, on connaît un type de grand écran qui utilise des dispositifs d'affichage en couleur à fibres optiques. La surface de visualisation de chacun des dispositifs est constituée par l'une des extrémités d'un faisceau de fibres optiques. L'autre extrémité du faisceau est disposé en regard d'une matrice de modulateurs de lumière, par exemple à cristaux liquides. Celle-ci est précédée de moyens générateurs de faisceaux colorés, d'autres moyens étant prévus pour contrôler le passage et la couleur de la lumière qui pénètrent dans chacune des fibres. Ce type d'agrandisseur d'images est parfaitement jointif avec ses agrandisseurs voisins, et définit avec ceux-ci une image continue de grande dimension. La structure d'un agrandisseur d'image de ce type, dont la surface de visualisation dépasse le mètre carré, nécessite un très grand nombre de fibres optiques. Le montage et la fixation de chacune d'elles rend la réalisation d'un tel agrandisseur d'images fastidieuse.

Le but de la présente invention est de proposer un procédé de fabrication d'un tel agrandisseur d'images permettant des fabrications relativement rapides.

D'autre part, le document US-A-3 909 109 décrit un module agrandisseur d'images du type comprenant un faisceau de fibres optiques présentant une face d'entrée destinée à recevoir une image à agrandir, constituée des premières extrémités, jointives, des fibres optiques du faisceau, et une face de sortie destinée à reconstituer l'image agrandie, constituée par les deuxièmes extrémités des fibres optiques du faisceau, ces deuxièmes extrémités étant non jointives aussi bien horizontalement que verticalement et maintenues dans un support matriciel de sortie. Le module est susceptible d'être fabriqué par le procédé consistant à constituer des bandes de fibres optiques dont les premières extrémités jointives des fibres d'une même bande constitue une rangée de l'image à agrandir et dont les deuxièmes extrémités non jointives constituent la rangée correspondante de l'image agrandie, et à mettre en place collectivement les deuxièmes extrémités de chaque bande dans leur position définitive, ces deuxièmes extrémités étant maintenues dans cette position définitive par un support matriciel de sortie.

D'autre part, le document EP-A-0 324 147 divulgue un procédé de fabrication d'un module agrandisseur d'images qui présente l'ensemble des caractéristiques de celui décrit dans le document US-A-3 909 109 mis à part celle consistant à avoir les deuxièmes extrémités de fibres non jointives dans deux directions orthogonales.

De plus, le document US-A-4 208 096 divulgue un module agrandisseur d'images qui comprend un faisceau de fibres optiques présentant une face d'entrée destinée à recevoir une image à agrandir, constituée des premières extrémités, jointives, de fibres optiques formant un faisceau, et une face de sortie destinée à reconstituer l'image agrandie, constituée par les deuxièmes extrémités des fibres optiques du faisceau, ces deuxièmes extrémités étant non jointives aussi bien horizontalement que verticalement et maintenues dans un support matriciel de sortie. Il fait également ressortir que ledit faisceau de fibres peut être constitué de bandes successives séparées par des entretoises.

L'objet principal de l'invention est un procédé de fabrication d'un module agrandisseur d'images pour panneaux lumineux à fibres optiques comprenant :
- un faisceau de fibres optiques comportant une face d'entrée destinée à recevoir une image à agrandir, constituée des premières extrémités des fibres optiques dudit faisceau, lesdites premières extrémités étant jointives, et une face de sortie destinée à reconstituer l'image agrandie, constituée par les deuxièmes extrémités des fibres optiques du faisceau, ces deuxièmes extrémités étant non jointives ; et
- un support matriciel de sortie pour maintenir lesdites secondes extrémités non jointives de fibres optiques dans leur position définitive, le procédé consistant à :
- constituer des bandes de fibres optiques dont les premières extrémités des fibres d'une même bande sont disposées jointivement pour constituer une rangée de l'image à agrandir et dont les deuxièmes extrémités de ces mêmes fibres sont disposées non jointivement pour constituer la rangée correspondante de l'image agrandie ; et
- assembler lesdites bandes de fibres optiques côte à côte, de façon à constituer ledit faisceau de fibres optiques, l'ensemble des deuxièmes extrémités non jointives des fibres optiques étant maintenues dans leur position définitive après assemblage par un support constituant ledit support matriciel de sortie.

Selon l'invention, on utilise comme support matriciel de sortie un support constitué de barrettes transparentes moulées par injection et fixées côte-à-côte sur une grille, chaque barrette correspondant à une bande de fibres optiques et ayant des trous pour recevoir chacun l'une des deuxièmes extrémités de ladite bande, les deuxièmes extrémités non jointives des fibres de chaque bande étant mises en place collectivement dans les trous respectifs de la barrette correspondante.

Les premières et deuxièmes extrémités des fibres d'une même bande sont, de préférence, maintenues par deux attaches respectivement d'entrée et de sortie constituées d'un support adhésif.

De plus, le support adhésif peut être renforcé d'une mince feuille d'aluminium.

De préférence, l'assemblage desdites bandes de fibres consiste successivement, au niveau de la face de sortie, à :
- plonger les deuxièmes extrémités dans une résine ;
- introduire collectivement les deuxièmes extrémités de fibres de chaque bande dans les trous respectifs de la barrettes correspondante ;
- polymériser la résine ; et
- fixer chaque barrette sur la grille.

La grille est de préférence de couleur noire.

Selon un aspect de cette mise en oeuvre, les barrettes sont en matériau thermoplastique transparent.

Cette barrette peut être constituée de plusieurs blocs reliés entre eux par des éléments de liaison et dans chacun desquels est insérée une deuxième extrémité de fibre optique, grâce à un cône d'entrée prolongé d'un conduit cylindrique, ces blocs comportant dans leur partie inférieure des moyens de réfraction des rayons lumineux.

Selon l'invention, et au niveau de la face d'entrée, le procédé consiste à :
- coller les premières extrémités jointives de la face d'entrée avec de la résine ;
- polymériser la résine ; et
- usiner la face d'entrée par un surfaçage.

L'invention et ses différentes caractéristiques techniques seront mieux comprises à la lecture de la description qui suit, annexée des figures représentant respectivement :
- figure 1, un grand écran obtenu à l'aide de plusieurs modules fabriqués au moyen du procédé selon l'invention ;
- figure 2, une bande de fibre optique symbolisant une étape intermédiaire du procédé selon l'invention ;
- figure 3, la mise en place des bandes pour former le module ;
- figure 4, la mise en oeuvre du procédé selon l'invention ;
- figure 5, en coupe verticale, un bloc utilisé dans cette mise en oeuvre ;
- figure 6, en coupe longitudinale, une rangée de blocs, tels que celui représenté à la figure 5.

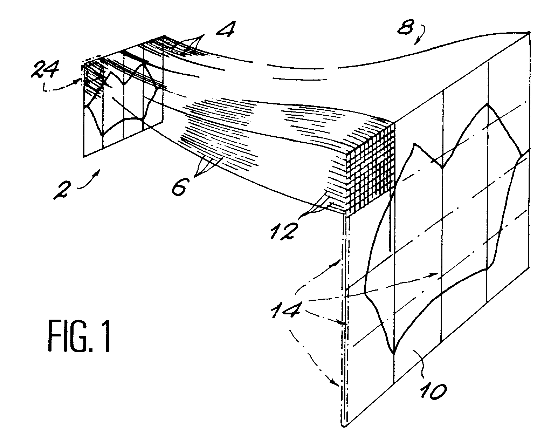

En référence à la figure 1, un grand écran ou un panneau lumineux peut être construit avec plusieurs modules agrandisseurs d'images obtenus par le procédé conforme à l'invention. On peut ainsi obtenir un panneau lumineux de plusieurs mètres carrés, en empilant des modules agrandisseurs en carré ou en rectangle.

Le module agrandisseur d'images obtenu par le procédé selon l'invention est constitué principalement par un faisceau 8 de fibres optiques 6. A la face d'entrée 2 du faisceau 8, les fibres 6 sont jointives, c'est-à-dire serrées les unes contre les autres. Elles sont rassemblées de manière à définir une face d'entrée 2 dont la forme correspond avec l'image à transmettre à agrandir. Dans le cas dessiné sur les figures, cette forme est rectangulaire avec un long côté légèrement plus grand que le petit côté. Pour former une image de sortie agrandie, la face de sortie 10 est beaucoup plus grande que la face d'entrée 2. Pour obtenir un tel agrandissement, le faisceau 8 de fibres 6 s'évase lorsque les fibres 6 se rapprochent de la face de sortie 10. Afin de reconstituer l'image reçue par la face d'entrée 2, la deuxième extrémité 12 de chaque fibre aboutit sur la face de sortie 10 à un point correspondant au même point de l'image de la face d'entrée 2, et auquel est fixée la première extrémité 4 de la fibre. Sur la face de sortie 10, les deuxièmes extrémités 12 des fibres se trouvent donc plus espacées.

Chacune des premières extrémités 4 est connectée avec un modulateur d'affichage en couleurs 24, par exemple du type à cristaux liquides. Chaque modulateur 24 appartient à une matrice de de modulation de lumière. La lumière fournie par chacun des modulateurs 24 est telle que l'image reconstituée par l'ensemble de ces modulateurs 24 peut être perçue sur la face de sortie 10 de manière satisfaisante par un observateur, le module étant placé en plein air.

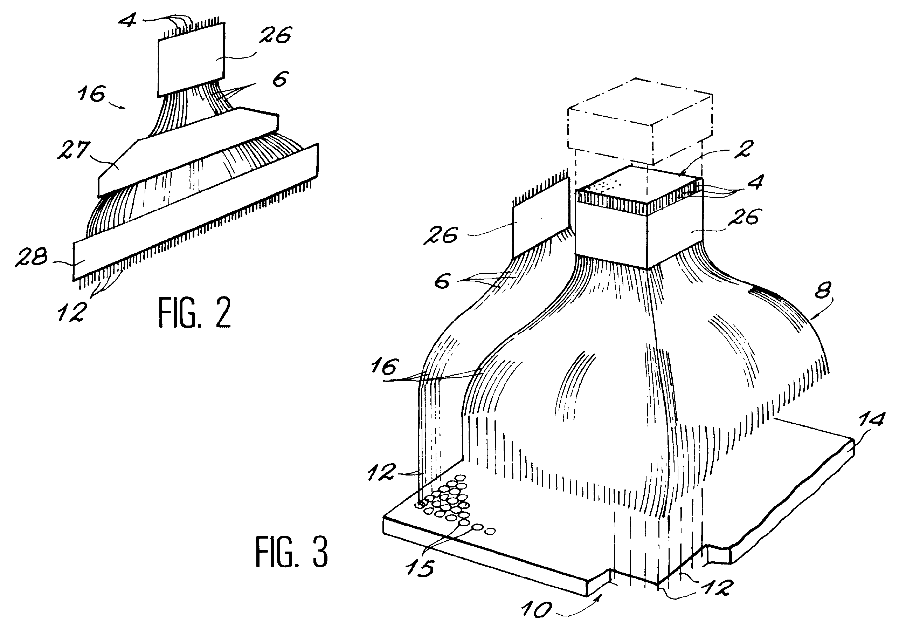

En référence aux figures 2 et 3, le procédé de fabrication selon l'invention d'un module agrandisseur d'images consiste en premier lieu à réaliser des bandes 16 de fibres optiques 6. Chaque bande 16 correspond à une rangée ou une colonne de l'image agrandie. Les premières extrémités jointives 4 des fibres 6 sont réunies de manière serrée pour former une rangée. Elles sont maintenues fixées de préférence par une attache d'entrée 26, qui entoure les premières extrémités 4. Pour respecter la forme évasée du faisceau de fibres, chaque fibre s'écarte par rapport aux autres pour constituer une rangée de sortie formée des deuxièmes extrémités 12 réunies de manière non jointive, espacées les unes des autres, régulièrement et en correspondance avec les emplacements des premières extrémités 4 correspondantes.

Cette première attache 26 est constituée d'un mince film adhésif. Ce dernier est éventuellement renforcé par une mince feuille métallique, par exemple en aluminium. Ceci permet de maintenir les premières extrémités 4 des fibres, dans un alignement correct.

Sur la figure 2, est représenté, à mi-longueur du faisceau, une deuxième attache 27 qui maintient les fibres dans leur position pendant la fabrication du faisceau.

En effet, cette deuxième attache 27 peut être ôtée une fois que la bande est constituée.

La face de sortie, constituée des deuxièmes extrémités 12, est maintenue en place de manière identique à la face d'entrée à l'aide d'une troisième attache 28. Elle est également constituée d'un adhésif industriel, éventuellement renforcé d'un ruban métallique, de préférence de l'aluminium. L'alignement et l'espacement des deuxièmes extrémités 12 des fibres 6 sont ainsi obtenus.

Une fois constituées, les bandes de fibres optiques sont assemblées sur un support matriciel de sortie 14.

Selon l'invention, les fibres de chaque bande sont mises en place collectivement, chaque deuxième extrémité non jointive 12 du faisceau étant insérée dans un trou 15 du support matriciel de sortie 14. Chaque deuxième extrémité 12 est donc ainsi maintenue dans sa position définitive.

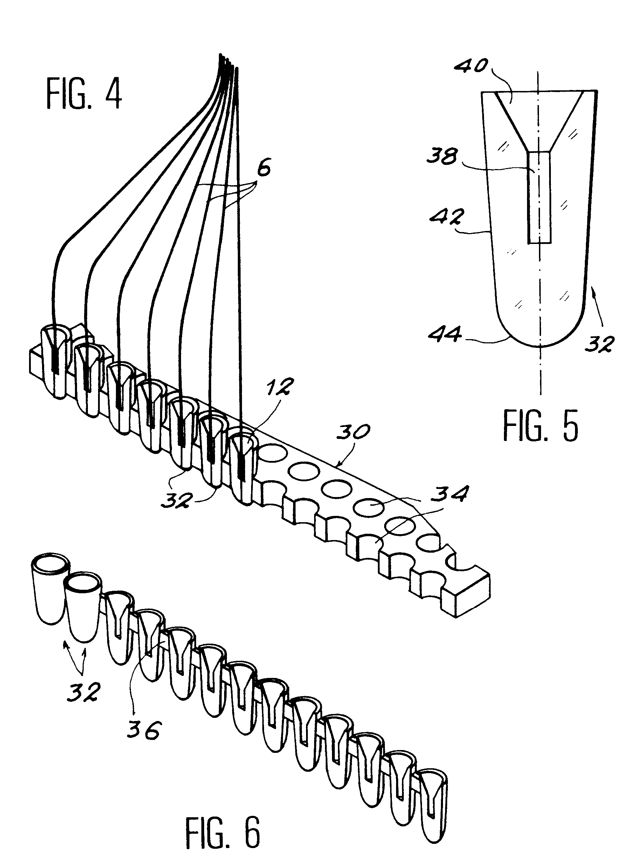

Le procédé de fabrication selon l'invention est explicité en référence à la figure 4. La face de sortie est constituée principalement de blocs optiques 32, dans lesquels sont insérées les fibres optiques 6, et d'une grille 30 destinée à recevoir les blocs optiques 32.

En référence à la figure 5, chaque bloc optique 32 est constitué d'une pièce conique en forme de doigt en un matériau transparent, tel qu'un matériau thermodurcissable, comme le plexiglas. Il possède un trou longitudinal. A son entrée, ce dernier a une forme conique 40. Celle-ci est prolongée d'une forme cylindrique 38 destinée à recevoir la fibre optique.

En associant un nombre de blocs optiques 32 correspondant au nombre de points d'une ligne ou d'une rangée de l'image à agrandir, on constitue une barrette correspondant à une bande, telle que celle repérée 16 sur les figures 2 et 3. Comme le montre la figure 6, les blocs optiques 32 peuvent être reliés entre eux par des éléments de liaison 36. Chaque barrette ainsi constituée peut être obtenue par moulage d'un matériau thermoplastique ou thermodurcissable transparent.

La grille 30 est constituée de préférence d'un matériau plastique noir. Elle possède un nombre de trous 34 correspondant au nombre de blocs optiques 32 à recevoir. Les trous 34 possèdent un diamètre correspondant au diamètre externe moyen des blocs optiques 32, de façon à maintenir ces derniers par coincement ou éventuellement par collage. Chaque trou 34 est percé à un endroit de l'image à agrandir. Leur espacement correspond à l'espacement des extrémités non jointives 12, de la bande 16 représentée à la figure 2.

La partie intérieure de chaque bloc optique 32 comprend des moyens 44 pour réfracter les rayons lumineux transportés par chaque fibre optique dans des directions précises en fonction de l'utilisation, par exemple dans un grand angle solide. Ces moyens 44 peuvent être constitués d'un ensemble de facettes.

Pour construire la face de sortie qui vient d'être décrite, le procédé selon l'invention consiste en premier lieu à plonger chacune des deuxièmes extrémités des fibres optiques dans un bac contenant de la résine. Celle-ci peut être de la résine époxy transparente ou de la résine polymérisable aux rayonnements ultraviolets. Les fibres optiques étant associées en bande, comme représenté par la figure 2, chaque bande est associée à une barrette. C'est-à-dire que chaque extrémité 12 de fibre optique est introduite dans un bloc optique 32, cette opération étant facilitée par la partie conique 40 du trou du bloc optique 32. La goutte de résine se trouvant à cette extrémité 12 de la fibre optique, remplit l'espace entre la fibre optique et la partie cylindrique 38 du bloc optique 32.

La polymérisation de cette résine peut s'effectue avec le temps ou au moyen d'une excitation par rayonnements ultraviolets, si la nature et l'épaisseur traversée du matériau constituant la barrette le permet.

Chaque barrette constituée ainsi d'une rangée de blocs optiques 32 associée à une bande de fibre optique 6 est ensuite introduite dans la grille 30. L'espacement entre chaque bloc optique 32 correspondant à l'espacement entre chaque trou 34 de la grille 30. Cette dernière opération peut être réalisée de manière automatisée.

Les avantages de cette conception de matrice de sortie sont les suivants.

Les blocs optiques 32 permettent d'élargir le champ de vision, sans perdre de lumière par diffusion, compte tenu que leurs faces de sortie sont polies et que la résine utilisée peut être transparente pour assurer la continuité optique.

Chaque fibre optique est parfaitement centrée dans son bloc optique 32.

Si la grille 30 de la matrice de sortie est de couleur noire, un bon contraste est obtenu sur l'image de sortie.

Il n'y a pas d'usinage de la face de sortie.

Enfin, le volume de résine utilisée dans cette conception est considérablement réduit, ce qui permet d'éviter un temps mort, pendant la fabrication, dû aux cycles de polymérisation. Ceci évite également la dégradation des performances de l'agrandisseur résultant de l'exothermie importante que ces cycles impliquent.

Pour obtenir la face d'entrée, repérée 2 sur la figure 1, on peut coller les premières extrémités jointives 4 avec de la résine. Celle-ci est ensuite polymérisée. La face d'entrée 2 ainsi obtenue peut être usinée par un surfaçage.

## Revendications

1. Procédé de fabrication d'un module agrandisseur d'images pour panneaux lumineux à fibres optiques et cristaux liquides du type comprenant :
- un faisceau (8) de fibres optiques (6) comportant une face d'entrée (2) destinée à recevoir une image à agrandir, constituée des premières extrémités (4) des fibres optiques (6) dudit faisceau (8), lesdites premières extrémités (4) étant jointives, et une face de sortie (10) destinée à reconstituer l'image agrandie, constituée par les deuxièmes extrémités (12) des fibres optiques (6) du faisceau (8), ces deuxièmes extrémités (12) étant non jointives ; et
- un support matriciel de sortie (14) pour maintenir lesdites secondes extrémités non jointives de fibres optiques dans leur position définitive,
le procécé consistant à :
- constituer des bandes (16) de fibres optiques (6) dont les premières extrémités (4) des fibres (6) d'une même bande (16) sont disposées jointivement pour constituer une rangée de l'image à agrandir et dont les deuxièmes extrémités (12) de ces mêmes fibres (6) sont disposées non jointivement pour constituer la rangée correspondante de l'image agrandie ; et
- assembler lesdites bandes de fibres optiques côte-à-côte, de façon à constituer ledit faisceau de fibres optiques, l'ensemble des deuxièmes extrémités non jointives (12) des fibres optiques étant maintenues dans leur position définitive après assemblage par un support (14) constituant ledit support matriciel de sortie,
caractérisé en ce que l'on utilise comme support matriciel de sortie (14) un support constitué de barrettes transparentes (32, 36) moulées par injection et fixées côte-à-côte sur une grille (30), chaque barrette correspondant à une bande (16) de fibres optiques et ayant des trous (34) pour recevoir chacun l'une des deuxièmes extrémités (12) de ladite bande (16), les deuxièmes extrémités non jointives des fibres de chaque bande étant mises en place collectivement dans les trous respectifs de la barrette correspondante.

2. Procédé selon la revendication 1, caractérisé en ce que les premières et deuxièmes extrémités (4, 12) des fibres (6) d'une même bande (16) sont maintenues par deux attaches respectivement d'entrée (26) et de sortie (28) constituées d'un support adhésif.

3. Procédé selon la revendication 2, caractérisé en ce que le support adhésif est renforcé d'une mince feuille d'aluminium.

4. Procédé selon la revendication 1, caractérisé en ce que ledit assemblage desdites bandes de fibres consiste successivement, au niveau de la face de sortie (10), à :
- plonger les deuxièmes extrémités (12) dans une résine ;
- introduire collectivement les deuxièmes extrémités des fibres de chaque bande (12) dans les trous respectifs (34) de la barrette correspondante ;
- polymériser la résine ; et
- fixer chaque barrette sur la grille (30).

5. Procédé selon la revendication 1, caractérisé en ce que la grille (30) est de couleur noire.

6. Procédé selon la revendication 1, caractérisé en ce que les barrettes sont en matériau thermoplastique transparent.

7. Procédé selon la revendication 1, caractérisé en ce que chaque barrette est constituée de plusieurs blocs optiques (32) reliés entre eux par des éléments de liaison (36), dans chacun desquels est insérée une deuxième extrémité (12) de fibre optique (6), grâce à un cône d'entrée (40) prolongé d'un conduit (38), ces blocs (32) comportant dans leur partie inférieure des moyens de réfraction des rayons lumineux.

8. Procédé selon l'une quelconque des revendications précédentes, caractérisé en ce qu'il consiste, au niveau de la face d'entrée (2), à :
- coller les premières extrémités jointives (4) de la face d'entrée (2) avec de la résine ;
- polymériser la résine ; et
- usiner la face d'entrée (2) par un surfaçage.

## Patentansprüche

1. Verfahren zur Herstellung eines Bildvergrößerungsmoduls für Leuchtschirme mit optischen Fasern und Flüssigkristallen von der Art, welche
- ein Bündel (8) optischer Fasern (6), umfassend eine Eintrittsfläche (2), die dazu bestimmt ist, ein zu vergrößerndes Bild zu empfangen, und die von den ersten Enden (4) der optischen Fasern (6) des genannten Bündels (8) gebildet wird, wobei die genannten ersten Enden (4) aneinanderstoßen, und eine Austrittsfläche (10), die dazu bestimmt ist, das vergrößerte Bild wiederherzustellen, und die von den zweiten Enden (12) der optischen Fasern (6) des Bündels (8) gebildet wird, wobei diese zweiten Enden (12) nicht aneinanderstoßen, und
- einen matrixförmigen Träger (14) für den Austritt umfaßt, um die genannten zweiten, nicht aneinanderstoßenden Enden optischer Fasern in ihrer endgültigen Position zusammenzuhalten,
wobei das Verfahren darin besteht,
- Streifen (16) optischer Fasern (6) zu bilden, worin die ersten Enden (4) der Fasern (6) desselben Streifens (16) aneinanderstoßend angeordnet sind, um eine Zeile des zu vergrößernden Bildes zu bilden, und worin die zweiten Enden (12) derselben Fasern (6) nicht aneinanderstoßend angeordnet sind, um die entsprechende Zeile des vergrößerten Bildes zu bilden, und
- die genannten Streifen optischer Fasern nebeneinander zusammenzusetzen, um das genannte Bündel optischer Fasern zu bilden, wobei die Gesamtheit der zweiten, nicht aneinanderstoßenden Enden (12) der optischen Fasern in deren endgültiger Position nach dem Zusammensetzen von einem Träger (14), der den genannten matrixförmigen Träger für den Austritt bildet, zusammengehalten wird,
dadurch gekennzeichnet, daß man als matrixförmigen Träger (14) für den Austritt einen Träger benutzt, der aus transparenten Leisten (32, 36) gebildet wird, die durch Spritzguß hergestellt sind und die nebeneinander auf einem Gitter (30) befestigt sind, wobei jede Leiste einem Streifen (16) optischer Fasern entspricht und Löcher (34) hat, damit jedes Loch eines der zweiten Enden (12) des genannten Streifens (16) aufnimmt, wobei die zweiten, nicht aneinanderstoßenden Enden der Fasern jedes Streifens gemeinsam in den jeweiligen Löchern der entsprechenden Leiste angebracht werden.

2. Verfahren nach Anspruch 1, dadurch gekennzeichnet, daß die ersten und zweiten Enden (4, 12) der Fasern (6) ein und desselben Streifens (16) von zwei Befestigungen für Eintritt (26) bzw. für Austritt (28) zusammengehalten werden, die von einer haftenden Unterlage gebildet werden.

3. Verfahren nach Anspruch 2, dadurch gekennzeichnet, daß die haftende Unterlage durch eine dünne Folie von Aluminium verstärkt ist.

4. Verfahren nach Anspruch 1, dadurch gekennzeichnet, daß das Zusammensetzen der genannten Faserstreifen auf der Höhe der Austrittsfläche (10) darin besteht, nacheinander
- die zweiten Enden (12) in ein Harz einzutauchen,
- die zweiten Enden der Fasern jedes Streifens (12) gemeinsam in die jeweiligen Löcher (34) der entsprechenden Leiste einzusetzen,
- das Harz zu polymerisieren und
- jede Leiste auf dem Gitter (30) zu befestigen.

5. Verfahren nach Anspruch 1, dadurch gekennzeichnet, daß das Gitter (30) von schwarzer Farbe ist.

6. Verfahren nach Anspruch 1, dadurch gekennzeichnet, daß die Leisten aus transparentem thermoplastischem Material sind.

7. Verfahren nach Anspruch 1, dadurch gekennzeichnet, daß jede Leiste von mehreren, untereinander durch Verbindungselemente (36) verbundenen optischen Blöcken (32) gebildet wird, in deren jeden dank eines Eintrittskegels (40), der in einen Kanal (38) ausläuft, ein zweites Ende (12) einer optischen Faser (6) eingesetzt ist, wobei diese Blöcke (32) in ihrem unteren Teil Einrichtungen zur Brechung der Lichtstrahlen umfassen.

8. Verfahren nach einem der vorhergehenden Ansprüche, dadurch gekennzeichnet, daß es auf der Höhe der Eintrittsfläche (2) darin besteht,
- die ersten, aneinanderstoßenden Enden (4) der Eintrittsfläche (2) mit Harz zu kleben,
- das Harz zu polymerisieren und
- die Eintrittsfläche durch eine Oberflächenbearbeitung zu behandeln.

## Claims

1. Process for the production of an image intensifier module for optical fibre light panels having:
- a bundle (8) of optical fibres (6) having an input face (2) for receiving an image to be intensified, constituted by first ends (4) of the optical fibres (6) of said bundle (8), said first ends (4) being contiguous, and an output face (10) for reconstituting the intensified image, constituted by the second ends (12) of the optical fibres (6) of the bundle (8), said second ends (12) being non-contiguous and
- a matrix output support (14) for maintaining said second non-contiguous ends of the optical fibres in their definitive position,
- the said process comprising:
- constituting bands (16) of optical fibres (6), whereof the first ends (4) of the fibres (6) of the same band (16) are arranged contiguously in order to form a row of the image to be intensified and whose second ends (12) of said same fibres (6) are arranged non-contiguously so as to constitute the corresponding row of the intensified image and
- assembling said bands of optical fibres in juxtaposed manner, so as to constitute said bundle of optical fibres, the assembly of the second non-contiguous ends (12) of the optical fibres being maintained in their definitive position after assembly by a support (14) constituting said matrix output support, characterized in that the matrix output support (14) is constituted by a support formed by transparent strips (32, 36) injection moulded and fixed in juxtaposed manner to a grid (30), each strip corresponding to a band (16) of optical fibres and having holes (34) each of which receives one of the second ends (12) of said band (16), the second, non-contiguous ends of the fibres of each band being collectively put into place in the respective holes of the corresponding strip.

2. Process according to claim 1, characterized in that the first and second ends (4, 12) of the fibres (6) of the same band (16) are maintained in place by two attachments, respectively an inlet (26) and an outlet (28) attachments constituted by an adhesive support.

3. Process according to claim 2, characterized in that the adhesive support is reinforced by a thin aluminium foil.

4. Process according to claim 1, characterized in that said assembly of said fibre bands successively consists, at the output face (10) of immersing the second ends (12) in a resin, collectively introducing the second ends of the fibres of each band (12) into the respective holes (34) of the corresponding strip, polymerizing the resin and fixing each strip to the grid (30).

5. Process according to claim 1, characterized in that the grid (30) is black.

6. Process according to claim 1, characterized in that the strips are made from a transparent thermoplastic material.

7. Process according to claim 1, characterized in that each strip is constituted by several optical blocks (32) connected to one another by connecting elements (36), in each of which is inserted a second end (12) of the optical fibres (6) by means of an inlet cone (40) extended by a duct (38), said blocks (32) having in their lower portion light ray refraction means.

8. Process according to any one of the preceding claims, characterized in that it consists, at the input face (2) of bonding the first contiguous ends (4) of the input face (2) with resin, polymerizing the resin and machining the input face (2) by a levelling process.
